# FASCICULE DE BREVET EUROPEEN

(11) **EP 2 946 990 B1**
(45) Date de publication et mention de la délivrance du brevet: **06.06.2018**
(21) Numéro de dépôt: 15175197.1
(22) Date de dépôt: 15.04.2011
(51) Int. Cl.: B62D 55/07, A63C 11/10, B60K 11/06, B60K 11/08, B62D 51/00

(54) **APPAREIL DE TRACTION COMPACT**
KOMPAKTE ZUGVORRICHTUNG
COMPACT PULLING APPARATUS

(30) Priorité: 15.04.2010 US 342538 P
(43) Date de publication de la demande: 25.11.2015
(62) Demande divisionnaire de: 11768347.4
(73) Titulaire: Martel, Yvon, Chicoutimi, Québec G7H 8C9 (CA)
(72) Inventeur: Martel, Yvon, Chicoutimi, Québec G7H 8C9 (CA)
(74) Mandataire: Grünecker Patent- und Rechtsanwälte PartG mbB

(56) Documents cités:
- FR-A1- 2 431 304
- US-A- 4 519 470

## Description

### RÉFÉRENCE À UNE DEMANDE ANTÉRIEURE

Le présent dossier revendique la priorité à la demande de brevet déposée aux États-Unis le 15 avril 2010 sous le numéro 61/342,538.

### DOMAINE TECHNIQUE

Le domaine technique concerne les appareils de traction compacts pouvant se déplacer sur des terrains difficiles, comme par exemple des terrains recouverts de neige, de sable, de boue, etc.

### ÉTAT DE LA TECHNIQUE

Plusieurs appareils ont été proposés au fil des années afin de permettre de circuler en terrains difficiles. Parmi ces appareils, plusieurs concernent des appareils compacts permettant une propulsion ou une traction d'une personne, notamment d'un skieur, à l'aide d'une chenille entraînée en rotation par un moteur. On en trouve des exemples dans les documents FR-2,431,304 (Jaulmes) publié le 15 février 1980 et US-4,519,470 (Allisio) publié le 28 mai 1985. De nombreux autres exemples existent. La plupart de ces appareils utilisent un moteur à essence pour entraîner la chenille en rotation. Certains utilisent un moteur électrique. Les appareils de ce genre peuvent être utiles comme moyens de locomotion légers, notamment là où il est difficile ou encore interdit de circuler à l'aide d'un véhicule plus gros. Par exemple, lorsqu'il s'agit de terrains dont la surface est enneigée, il peut arriver que la neige soit beaucoup trop poudreuse et
profonde pour permettre la présence d'une motoneige. Un autre avantage de ces appareils est que leur transport dans un autre véhicule est beaucoup plus simple et facile que dans le cas d'un véhicule plus gros et plus lourd, comme par exemple une motoneige.

Malheureusement, aucun des appareils proposés antérieurement ne s'est révélé être entièrement bien adapté aux conditions hivernales très rigoureuses que l'on peut retrouver à certaines périodes de l'année dans les endroits où ces appareils sont susceptibles d'être utiles. Par exemple, une température très froide peut réduire considérablement la fiabilité et l'autonomie d'un appareil muni d'un moteur électrique alimenté par des batteries. Dans le cas d'un moteur à essence, la combinaison du froid extérieur et de la chaleur dégagée par le moteur peut occasionner des accumulations de glace et de neige compactée à des endroits sensibles de l'appareil. De plus, les températures moins froides sont davantage susceptibles d'occasionner des infiltrations d'eau dans l'appareil et ainsi causer des pannes qui peuvent être difficile à réparer, surtout lorsqu'elles surviennent dans des endroits loin en forêt ou dans d'autres endroits difficiles d'accès.

Les appareils proposés antérieurement ne permettent pas non plus de transporter facilement un générateur électrique à des endroits difficiles d'accès.

Il est donc clair que des améliorations dans le domaine technique concerné sont encore nécessaires.

### SOMMAIRE

Selon l'invention il est proposé un appareil de traction compact inclut : un boîtier étanche de forme allongée s'étendant dans un axe longitudinal et définissant une chambre interne, le boîtier ayant une paroi supérieure et une paroi inférieure; une chenille disposée autour du boîtier selon son axe longitudinal et permettant à l'appareil de se mouvoir lorsque la chenille est entraînée en rotation autour du boîtier; un guidon relié au boîtier et s'étendant substantiellement vers l'arrière, caractérisé en ce qu'il inclut : un générateur placé dans la chambre interne du boîtier et servant à produire de l'électricité pouvant alimenter un équipement externe; et un moteur à essence servant à sélectivement entraîner la chenille en rotation et à faire tourner le générateur, le moteur étant situé dans la chambre interne du boîtier.

### BRÈVE DESCRIPTION DES FIGURES

La figure 1 est une vue isométrique d'un exemple d'un appareil réalisé selon le concept proposé;
La figure 2 est une vue de côté de l'appareil montré à la figure 1;
La figure 3 est une vue similaire à la figure 1 mais montre l'appareil sans sa chenille et sans les parois latérales sur les côtés de son boîtier;
La figure 4 est une vue similaire à la figure 3 mais montre le côté gauche de l'appareil vu de l'arrière;
La figure 5 est une vue du côté droit de l'appareil montré à la figure 3;
La figure 6 est une vue du dessus de l'appareil montré à la figure 3;
La figure 7 est une vue similaire à la figure 1 mais dans laquelle l'opérateur est debout dans un traîneau attelé à l'appareil; et
Les figures 8 à 13 sont des vues similaires aux figures 1 à 6 mais montrent un deuxième exemple d'appareil dans lequel un moteur électrique est utilisé.

### DESCRIPTION DÉTAILLÉE

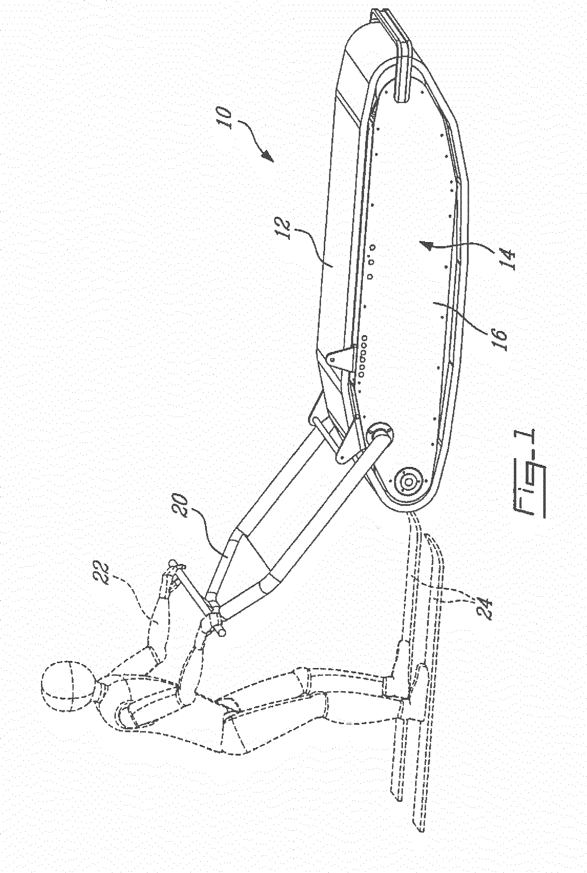

La figure 1 est une vue isométrique d'un exemple d'un appareil 10 incorpore selon le concept proposé. Dans cet exemple, l'appareil 10 utilise un moteur à essence pour faire tourner une chenille 12 placée autour d'un boîtier étanche 14 ayant une forme allongée. Il est à noter à ce point-ci que la référence à un boîtier « étanche » signifie que sa construction est étanche mais n'exclut pas la présence d'un circuit de ventilation de l'intérieur du boîtier 14. Ce circuit de ventilation comprend au moins une entrée d'air et au moins une sortie d'air. Le circuit de ventilation permet notamment de refroidir l'intérieur du boîtier 14 lorsque sa température est au-dessus d'une limite supérieure, comme par exemple au-dessus de 25°C. D'autres valeurs sont également possibles.

La rotation de la chenille 12 autour du boîtier 14 permet à l'appareil 10 de se mouvoir. Le boîtier 14 a une forme surbaissée afin de garder son centre de gravité le plus bas possible. Le boîtier 14 comprend une paroi latérale 16 de chaque côté. Le boîtier 14 peut être fait par exemple d'un matériau métallique, plastique ou les deux. L'aluminium est un exemple d'un matériau possible pour le boîtier 14 car ce matériau est léger et résistant. La chenille 12 peut être faite de caoutchouc ou d'un autre polymère. D'autres matériaux sont possibles.

L'appareil 10 comprend un guidon 20 qui est relié au boîtier 14. Le guidon 20 s'étend substantiellement vers l'arrière de l'appareil 10. Le guidon 20 est destiné à être tenu et manipulé par un opérateur 22 situé à l'arrière de l'appareil 10, tel qu'illustré de façon semi-schématique à la figure 1. Le guidon 20 peut être pivotant ou fixe, selon les besoins. Lorsqu'il est pivotant, il est possible de limiter le pivotement du guidon 20 entre un angle minimum et un angle maximum par rapport à l'horizontal.

L'opérateur 22 peut être équipé de skis 24 (ou l'équivalent) ou encore être à bord d'un traîneau attelé à l'appareil 10. Comme on peut le constater à la figure 1, le centre de gravité de l'appareil 10 est sous la hauteur des genoux de l'opérateur 22.

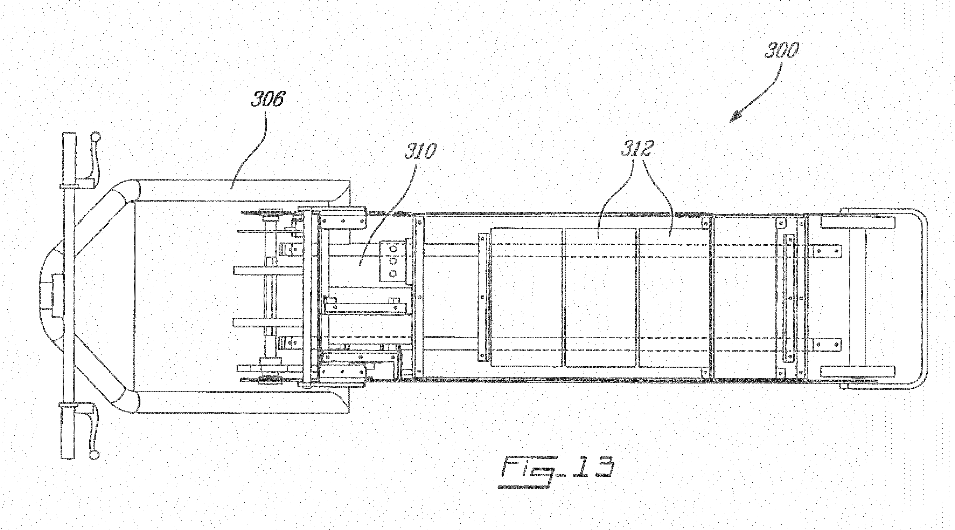

L'opérateur 22 dispose de contrôles sur les poignées du guidon 20 lui permettant notamment de contrôler la vitesse de déplacement de l'appareil 10 et d'autres fonctions. Les contrôles (non illustrés) peuvent être reliés au boîtier 14 à l'aide de fils et/ou de moyens de communications sans fil. Selon le modèle, il est notamment possible de prévoir un dispositif permettant à l'appareil 10 de reculer par la force de son moteur, ce qui peut s'avérer très utile dans certaines circonstances. Des leviers permettant d'activer un frein peuvent aussi être prévus (voir la figure 13). Ces leviers peuvent être disposés de façon similaire aux freins d'une bicyclette ou d'une moto, par exemple. D'autres éléments peuvent être montés sur le guidon 20 selon les besoins, notamment une lampe, des cadrans indicateurs, etc.

Lorsqu'il circule vers l'avant, l'appareil 10 tire l'opérateur 22 et, s'il y a lieu, déplace une charge utile, comme par exemple une charge utile placée à bord d'un traîneau attelé à l'appareil 10. Un tel appareil 10 peut facilement tirer une charge équivalente à deux fois son poids dans de la neige poudreuse. Par exemple, des tests effectués à l'aide d'un appareil de 125 km (275 1b) ont démontrés qu'un tel appareil pouvait tirer une charge de 225 kg (550 1b) sur une distance de 150 km avec un seul plein d'essence.

L'opérateur 22 peut modifier la direction de déplacement de l'appareil 10 en bougeant latéralement le guidon 20 dans la direction opposée au virage à effectuer. Cette action est similaire à celle faite par l'opérateur d'une petite tondeuse à gazon conventionnelle.

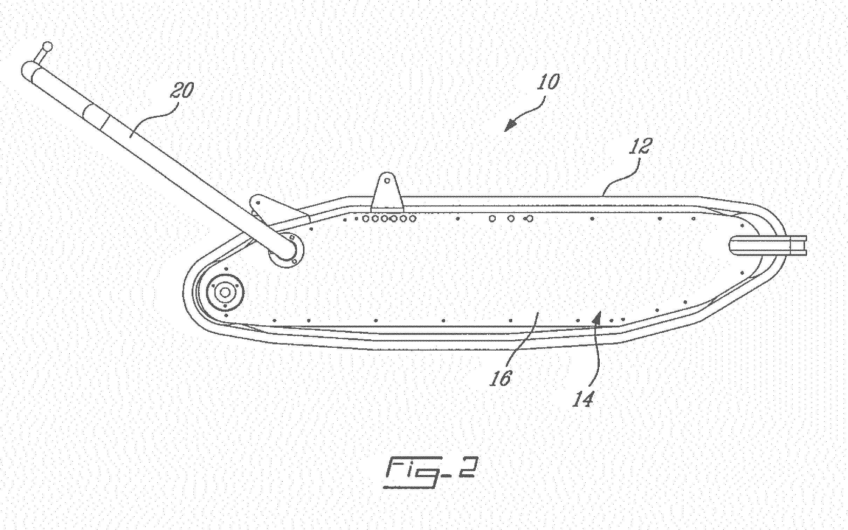

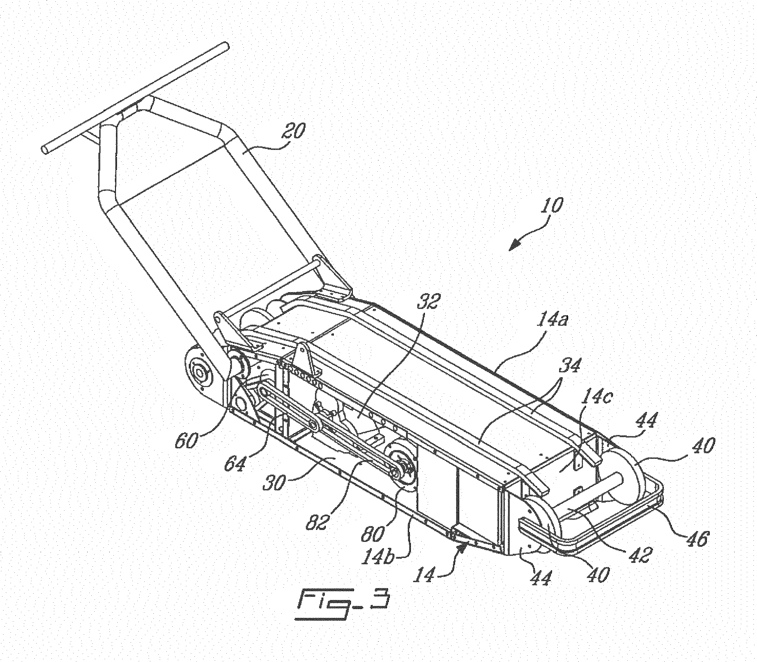

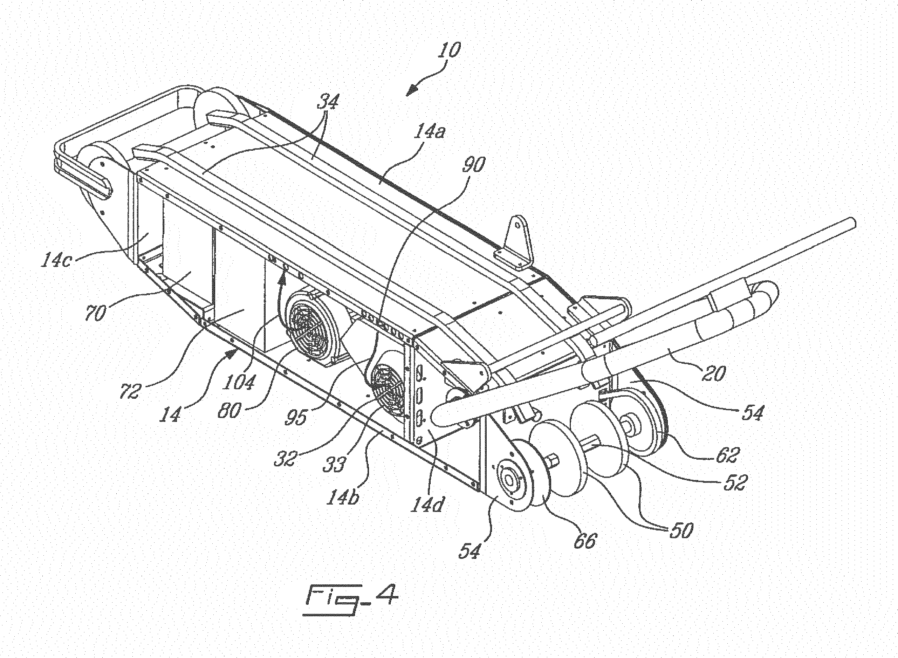

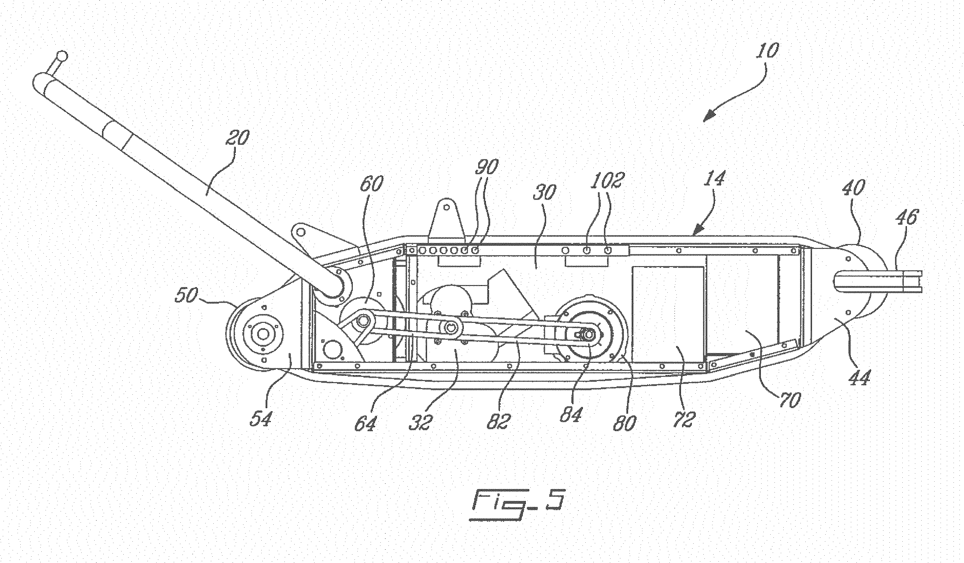

La figure 2 est une vue de côté de l'appareil 10 montré à la figure 1. Les figures 1 et 2 montrent l'appareil 10 assemblé. La figure 3 est une vue similaire à la figure 1 mais montre l'appareil 10 sans sa chenille 12 et sans les parois latérales 16 sur les côtés de son boîtier 14. La figure 4 est une vue similaire à la figure 3 mais montre le côté gauche de l'appareil 10 vu de l'arrière. La figure 5 est une vue du côté droit de l'appareil 10 montré à la figure 3.

Comme on peut le voir en particulier aux figures 3 et 4, le boîtier 14 forme une chambre interne 30 dans laquelle sont placés différentes composantes de l'appareil 10, notamment son moteur à essence 32. Le boîtier 14 possède également une paroi supérieure 14a, une paroi inférieure 14b, une paroi avant 14c et une paroi arrière 14d. Le boîtier 14 possède une structure de renforcement, laquelle peut inclure une ou plusieurs parois internes pouvant compartimenter la chambre interne 30. Les compartiments communiquent entre eux.

Une paire de glissières supérieures 34 est disposée de façon longitudinale sur la paroi supérieure 14a du boîtier 14. Une paire de glissières inférieures, similaire à celle sur la paroi supérieure 14a, est disposée de façon longitudinale sur la paroi inférieure 14b du boîtier 14. Les glissières sont faites d'un matériau ayant un coefficient de friction très bas. Elles permettent notamment à la chenille 12 de tourner autour du boîtier 14 et de réduire la friction entre la face intérieure de la chenille 12 et l'extérieur du boitier 14. Elles servent aussi de guides pour garder la chenille 12 dans l'axe de l'appareil 10. Les glissières s'étendent sur quelques centimètres au-delà des extrémités avant et arrière des parois supérieure 14a et inférieure 14b afin de supporter la chenille 12 sur presque toute la longueur de l'appareil 10.

Au moins un rouleau avant est monté en rotation à l'avant du boîtier 14. Dans l'exemple illustré, deux rouleaux avant 40 sont prévus. Les rouleaux avant 40 sont montés coaxialement autour d'un axe transversal avant 42, lequel est supporté par un axe interne graissé fixé à ses extrémités à deux plaques opposées 44 disposées parallèlement à l'axe longitudinal de l'appareil 10. Les plaques 44 sont reliées de façon rigide à l'avant du boîtier 14. Également dans l'exemple illustré, un pare-chocs 46 est prévu tout à l'avant de l'appareil 10. Les extrémités du pare-chocs 46 sont reliées aux deux plaques 44, tel que montré notamment aux figures 3 et 4. Un dégagement suffisant est prévu entre l'intérieur du pare-chocs 46 et les rouleaux avant 40 pour permettre à la chenille 12 de tourner autour du boîtier 14 sans accrocher l'intérieur du pare-chocs 46.

Au moins un rouleau arrière est monté en rotation à l'arrière du boîtier 14. Dans l'exemple illustré, deux rouleaux arrière 50 sont prévus. Les rouleaux arrière 50 sont montés coaxialement autour d'un axe transversal arrière 52, lequel est supporté à ses extrémités par des roulements situés dans deux plaques opposées 54 disposées parallèlement à l'axe longitudinal de l'appareil 10. Les plaques 54 sont reliées de façon rigide à l'arrière du boîtier 14. Également dans l'exemple illustré, un lien mécanique est prévu entre l'arbre de sortie d'une transmission 60 située dans le boîtier 14 et l'axe transversal arrière 52. Les rouleaux arrière 50 sont donc utilisés pour entraîner la chenille 12 en rotation afin de pouvoir déplacer l'appareil 10. Différents types de liens mécaniques peuvent être utilisés entre la transmission 60 et l'axe transversal arrière 52. Celui qui est illustré comprend une courroie 62 ou une chaîne et permet une réduction de la vitesse de rotation entre l'arbre de sortie de la transmission 60 et l'axe transversal arrière 52. D'autres types de liens et configurations sont également possibles. Le lien mécanique entre le moteur 32 et la transmission 60 est assuré par une courroie 64. La transmission 60 peut permettre par exemple la marche avant et arrière. Elle peut avoir un ou encore plusieurs vitesses, ou bien être à vitesse variable.

L'axe transversal arrière 52 supporte également un disque de frein 66, lequel est montré à la figure 4. Le disque est placé près de l'extrémité de gauche dans l'exemple. Les mâchoires du frein sont reliées au boîtier 14 et peuvent être actionnées par l'opérateur 22 à partir du guidon 20 (voir la figure 13).

Le moteur d'entraînement 32 de la chenille 12 dans l'exemple des figures 1 à 4 est un moteur à essence placé directement à l'avant de la transmission 60. Une paroi transversale intermédiaire est présente dans l'exemple illustré afin de renforcer la partie entre le moteur à essence 32 et la transmission 60. Le moteur à essence 32 est alimenté en carburant à partir d'un réservoir 70 situé à l'avant de la chambre interne 30 de l'appareil 10. Une batterie 72 est placée à côté du réservoir à essence. Cette batterie 72 sert notamment à alimenter le démarreur électrique du moteur à essence 32. L'opérateur 22 peut ainsi démarrer et arrêter le moteur 32 sans avoir à y accéder directement.

L'appareil 10 des figures 1 à 5 intègre également un générateur 80 placé dans la chambre interne 30 et pouvant produire de l'électricité destiné à alimenter un ou des équipements externes à un voltage correspondant notamment à une prise de courant domestique, comme par exemple 110V ou 220V/240V à 60Hz ou encore à 50Hz. Une ou des prises de courant sont disponibles sur l'appareil 10 ou encore sur le générateur 80 lui-même. Le générateur 80 comprend un rotor interne pouvant être entraîné en rotation à l'aide du même moteur à essence 32. La possibilité de générer de l'électricité à partir de l'appareil 10 peut être très avantageuse pour des utilisateurs tels que des ouvriers appelés à utiliser des outils électriques sur des sites isolés, ou encore des propriétaires de chalets situés loin des zones habitées. De très nombreuses autres utilisations peuvent être envisagées. Un générateur ayant une puissance de 4000 à 6000W peut être installé dans un appareil 10 de la taille représentée. Un générateur plus petit ou même plus gros est aussi possible.

L'axe du générateur 80 est disposé transversalement à l'axe longitudinal de l'appareil 10. Le générateur 80 pourrait aussi être placé autrement dans certains modèles. Il est relié à l'arbre de sortie du moteur à essence 32 par une courroie de transmission 82. Un embrayage électrique 84 monté sur l'arbre du générateur 80 permet d'activer et de désactiver à distance le lien mécanique entre le générateur et le moteur à essence 32. Ainsi, lorsque le générateur 80 n'a pas à être utilisé, comme par exemple lorsque l'appareil 10 est en déplacement, la rotation inutile du rotor du générateur 80 peut être évitée. Lorsque le générateur 80 est en fonction, la transmission 60 de l'appareil 10 est mise au neutre.

L'admission d'air neuf à l'intérieur de la chambre interne 30 du boîtier 14 se fait par une série d'ouvertures 90 prévues sur au moins un côté du boîtier 14, immédiatement sous la paroi supérieure 14a. Les ouvertures 90 ont un diamètre relativement petit afin de permettre une diminution de l'ingestion de neige et de débris, comme par exemple des brindilles de bois ou autre. L'air qui passe par les ouvertures 90 entre dans une boîte d'admission 92 qui collecte l'air provenant de toutes les ouvertures 90 de chaque côté du boîtier 14. Lors de l'utilisation de l'appareil 10, la boîte d'admission 92 est chauffée par le dessous grâce à la chaleur dégagée par le moteur à essence 32 et qui circule dans la chambre interne 30. Cette chaleur permet de garder la chambre interne 30 bien au-dessus du point de congélation (0°C) même si la température extérieure est très froide, comme par exemple sous le -20°C. Grâce à cette chaleur, toute particule de neige qui entre dans la boîte d'admission 92 peut fondre et s'égoutter vers l'extérieur, et ce, même par temps froid. L'air sort de la boîte d'admission 92 par un tuyau de sortie 94 qui est circulaire dans l'exemple. Le haut du tuyau de sortie 94 peut être surélevé de plusieurs millimètres par rapport au fond de la boîte d'admission 92 afin d'éviter l'écoulement de l'eau directement vers la chambre interne 30.

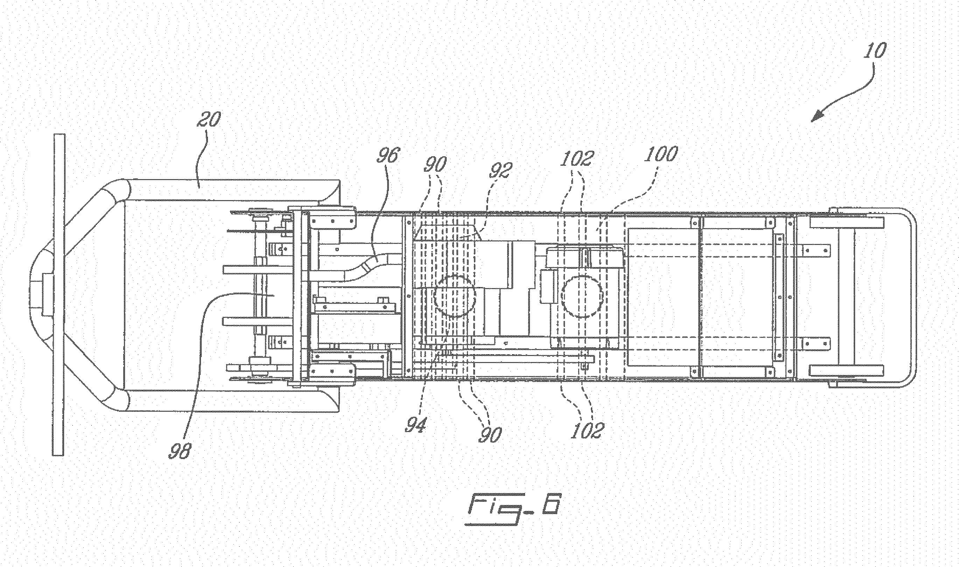

La figure 6 est une vue du dessus de l'appareil 10 montré à la figure 3. On peut y voir la boîte d'admission d'air 92. L'air qui sort de la boîte d'admission 92 entre ensuite canalisé dans un conduit flexible 95 (illustré de façon schématique à la figure 4) menant à l'entrée 33 de la volute du ventilateur de refroidissement intégrée au moteur à essence 32. Le ventilateur dans le moteur 32 génère ainsi la force de succion requise pour aspirer l'air par les ouvertures 90. L'air de refroidissement passe autour du ou des cylindres du moteur à essence 32 et aboutit ensuite à l'intérieur de la chambre interne 30.

La sortie de l'air de l'intérieur de l'appareil 10 s'effectue de deux façons. D'une part, la combustion de l'essence dans le moteur 32 génère des gaz d'échappement. L'air servant à cette combustion est admis à l'intérieur du moteur 32 à partir de l'intérieur de la chambre interne 30 ou peut aussi provenir directement de la boîte d'admission 92 dans le cas de certains moteurs. Les gaz d'échappement à la sortie du ou des cylindres du moteur 32 sont ensuite dirigés vers l'arrière de l'appareil 10 par un tuyau d'échappement 96, lequel est montré à la figure 6. La sortie du tuyau d'échappement 96 se situe dans l'espace 98 où se trouvent l'axe transversal arrière 52 et les deux rouleaux arrière 50. Cet espace 98 est partiellement obstrué par la présence de la chenille 12 lorsque l'appareil 10 est assemblé. Cette configuration permet notamment de réduire le bruit et d'éviter tout contact possible de la peau ou des vêtements de l'opérateur 22 avec la sortie chaude du tuyau d'échappement 96. D'autres configurations sont également possibles.

De l'air est aussi évacué de l'intérieur de la chambre interne 30 par une sortie d'air qui fait partie du circuit de ventilation. L'air passant par la sortie traverse tout d'abord par le circuit de refroidissement du générateur 80 et circule ensuite par un conduit flexible 104 (représenté de façon schématique à la figure 4) jusqu'à l'entrée d'une boîte de sortie d'air 100. La boîte de sortie 100 a une construction similaire à celle de la boîte d'admission 92. L'air est ensuite évacuée par des ouvertures 102 placés sur au moins un côté du boîtier 14.

Lorsque le générateur 80 est en fonction, le ventilateur intégré au générateur 80 contribue au déplacement de l'air afin d'augmenter le débit d'air pour son refroidissement. Des ventilateurs additionnels placés en série sur les conduits flexibles reliés à l'entrée et à la sortie d'air peuvent permettent d'augmenter davantage la circulation d'air si la température dans la chambre interne 30 devient trop élevée. Ces ventilateurs peuvent être mis en marche automatiquement grâce à un thermostat muni d'une sonde de température ou d'un autre dispositif.

L'appareil 10 est configuré de telle sorte qu'une pression positive est créée dans la chambre interne 30. Cela est réalisé en prévoyant une surface totale d'admission de l'air plus grande que la surface totale de sortie. Dans l'exemple, le nombre d'ouvertures 90 et plus grand que le nombre d'ouvertures 102. La pression positive permet notamment d'obtenir une meilleure étanchéité du boîtier 14.

Lorsque l'appareil 10 est en mouvement, les côtés du boîtier 14 sont fermés de façon étanche à l'aide des parois latérales 16, lesquelles sont montrées aux figures 1 et 2. Ces parois latérales 16 sont visées ou autrement fixées au reste du boîtier 14. L'intérieur du boîtier 14 demeure ainsi étanche et sec lors de l'utilisation de l'appareil 10.

Tel qu'il est montré à la figure 5, le dessous du boîtier 14 est bombé en son centre. Cette surélévation est d'environ 3 cm à l'avant et à l'arrière de la chenille 12 dans l'appareil 10 montré en exemple. Cette partie centrale correspond environ au tiers de la longueur de l'appareil 10. La surélévation facilite notamment le mouvement de lacet lors des virages ainsi que le pivotement manuel de l'appareil 10 sur des surfaces dures et rugueuses, comme par exemple l'asphalte et le béton. De plus, l'avant de la paroi inférieure 14b définit un angle par rapport à l'horizontal. L'axe transversal avant 42 est ainsi plus haut que l'axe transversal arrière 52. Cela facilite aussi le passage par-dessus des obstacles.

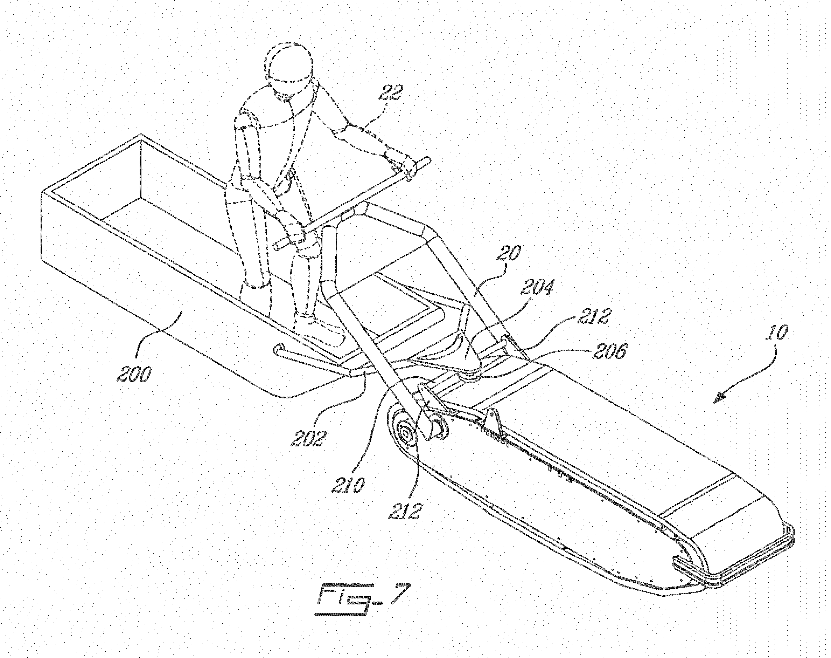

La figure 7 est une vue similaire à la figure 1 mais dans laquelle l'opérateur 22 est debout dans un traîneau 200 attelé à l'appareil 10. L'attelage 202 du traîneau 200 est relié à un support 210 ayant la forme, dans l'exemple montré, d'une tige transversale droite ou encore légèrement recourbée vers l'arrière en son centre. La tige transversale 210 est soutenue par deux plaques correspondantes 212 projetant vers le haut du boîtier 14. L'attelage 202 comprend deux bras de retenue du traîneau 200, lesquels sont fixés à une plaque 204 qui peut pivoter autour d'un axe vertical à sa jonction avec un élément d'attache 206. L'élément d'attache 206 peut coulisser de gauche à droite le long de la tige transversale 210 grâce à des poulies placées de chaque côté de l'élément d'attache 206. Dans un virage, l'élément d'attache 206 peut alors se déplacer vers l'une des extrémités de la tige transversale 210, ce qui facilite la maniabilité de l'appareil 10 et diminue l'effort requis de la part de l'opérateur 22.

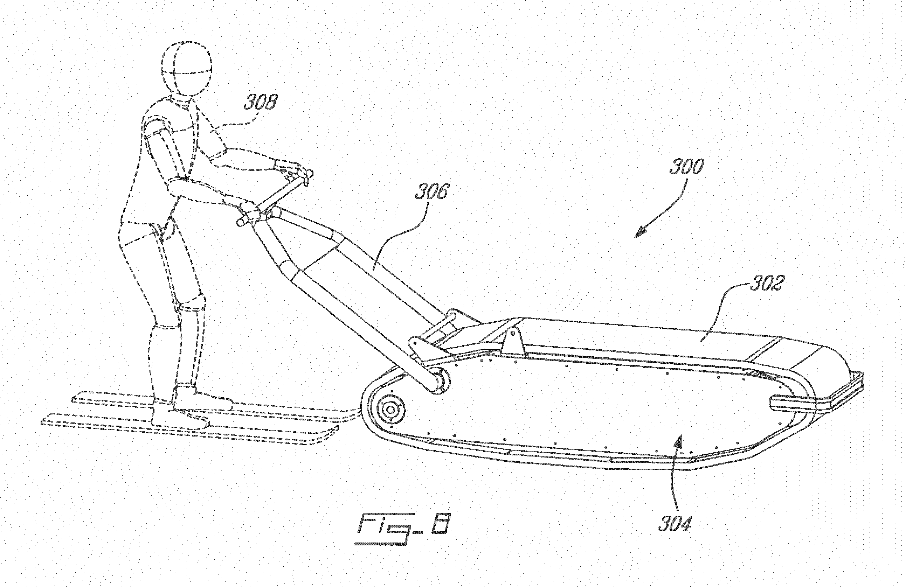

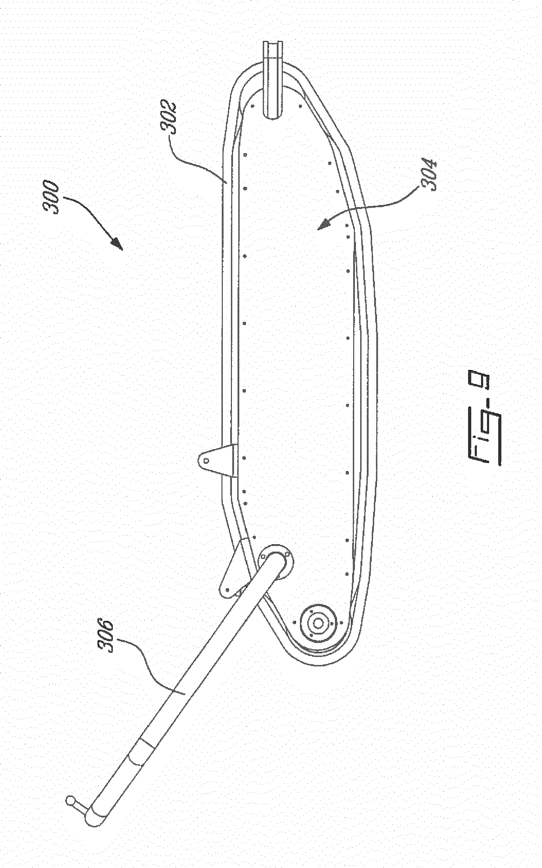

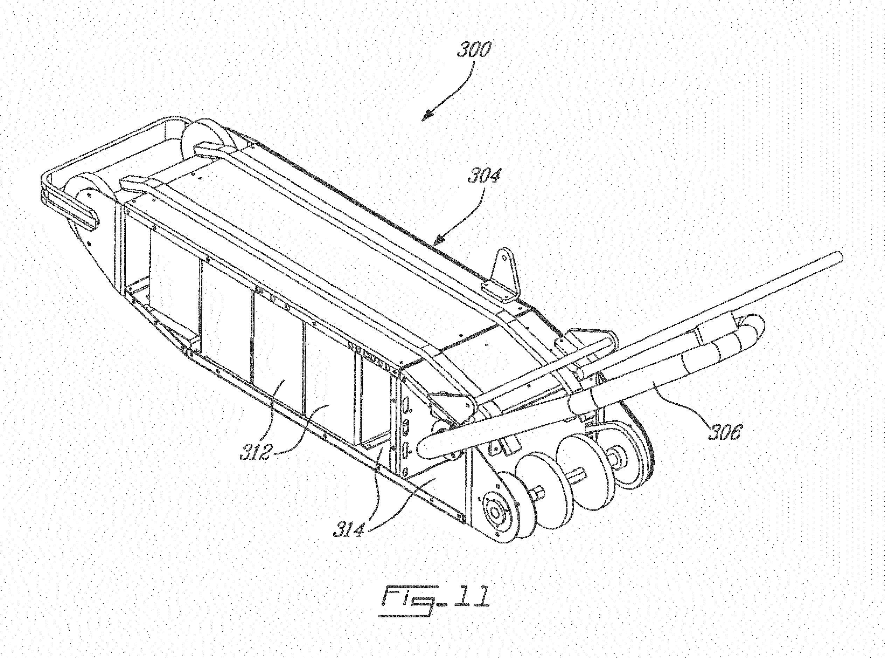

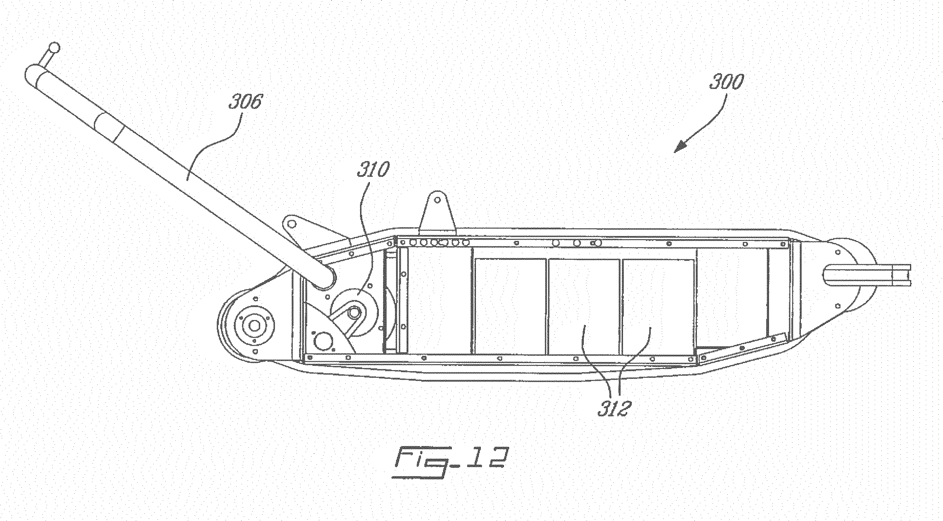

Les figures 8 à 13 sont des vues similaires aux figures 1 à 6 mais montrent un deuxième exemple d'appareil 300 dans lequel un moteur électrique est utilisé. Cet appareil 300 est autrement similaire à l'appareil 10 de l'exemple précédant. L'appareil 300 comprend une notamment chenille 302, un boîtier étanche 304 et un guidon 306, lequel est tenu par un opérateur 308. L'appareil 300 peut aussi être utilisé avec le traîneau 200 de la figure 7.

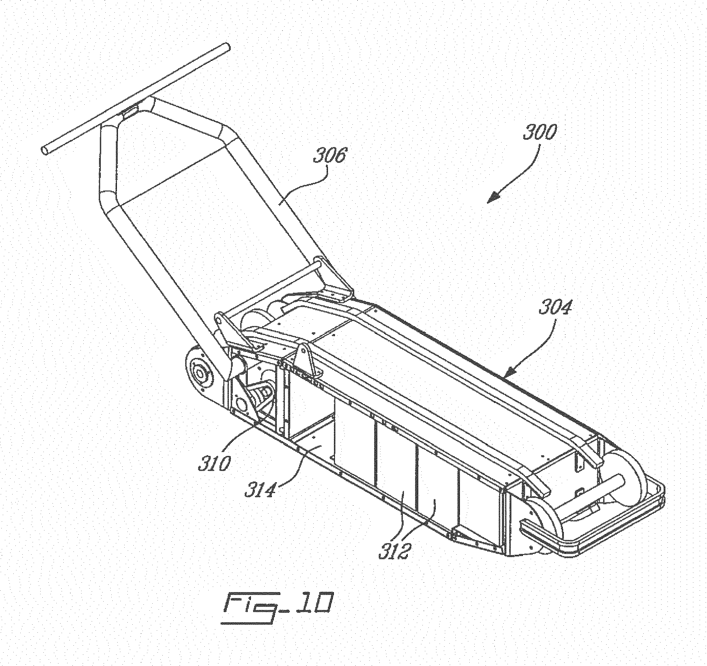

La chenille 302 de l'appareil 300 est entraînée en rotation à l'aide d'un moteur électrique 310 (figure 10). Ce moteur 310 est alimenté en électricité par une ou plusieurs batteries 312, également placées dans la chambre interne 314 du boîtier 304. Le moteur électrique 310 peut être du type AC ou DC, avec ou sans aimants permanents. Un groupe de quatre batteries au plomb à décharge profonde 312 est montré dans l'exemple illustré. Le nombre et le type de batteries 312 peuvent différer selon les besoins. Les batteries 312 sont reliées à un contrôleur électrique actionné par l'opérateur 308 à partir des poignées du guidon 306. Les différentes connexions électriques ne sont pas illustrées dans les figures afin de simplifier les illustrations.

En cours d'utilisation, le moteur électrique 310 dégage de la chaleur. Cette chaleur représente environ 10% de l'énergie électrique puisée dans les batteries 312. La chaleur ainsi dissipée est utilisée dans la chambre interne 314 de l'appareil 300 pour tenir au chaud les batteries 312 lorsque la température extérieure est très froide. Cette chaleur permet alors de conserver une température optimale des batteries malgré le temps très froid. La température optimale peut être par exemple de l'ordre de 20 à 25°C. D'autres températures sont aussi possibles. La récupération de cette chaleur est bénéfique car la plupart des batteries perdent leur efficacité par temps froid. C'est notamment le cas des batteries au plomb. Bien que des types de batteries plus performantes existent, les batteries au plomb demeure un choix intéressant parce qu'elles sont facilement disponibles et relativement peu dispendieuses. Elles résistent mieux au froid que des batteries au nickel ou au lithium, par exemple. L'efficacité des batteries au plomb baisse cependant de façon presque linéaire en fonction de la température, passant par exemple de 100% pour 25°C à 30% pour -40°C, selon le type exact de batterie. La baisse d'efficacité a donc une incidence directe sur l'autonomie de l'appareil 300. En gardant la chaleur dans le boîtier 304 par temps froid, les batteries 312 peuvent alors conserver une efficacité nettement supérieure à celle qu'elles auraient à basse température. L'intérieur du boîtier 304 peut aussi être isolé pour aider à conserver la chaleur.

Un système interne de ventilation est prévu en cas de surchauffe, par exemple lorsque l'appareil 300 opère par temps doux et que le moteur électrique 310 est très sollicité. Ce système interne de ventilation fait partie du circuit de ventilation. Il peut comprendre un thermostat qui actionne au moins un ventilateur assurant un apport d'air de l'extérieur afin de dissiper la chaleur interne. L'entrée d'air et la sortie d'air peuvent être placées dans le haut du guidon 306 à une certaine distance l'un de l'autre. L'air circule alors dans les tuyaux formant les côtés du guidon 306. Le ou les ventilateurs peuvent être placés dans le boîtier 304 ou encore dans le guidon 306. La jonction entre le guidon 306 et le boîtier 304 est configurée afin de permettre un passage de l'air entre les deux. Ainsi, le boîtier 304 peut être construit de façon très étanche jusqu'à la hauteur de l'entrée et de la sortie d'air dans le guidon 306. Une pression est positive est maintenue à l'intérieur de la chambre interne 314 afin de réduire les risques d'infiltration d'eau par des endroits qui ne seraient pas entièrement bien scellés. L'appareil 300 pourra même alors être immergé de façon ponctuelle, ce qui peut être requis par exemple lorsque l'appareil 300 doit franchir un ruisseau non gelé ou un autre point d'eau similaire.

Il est possible d'incorporer un élément chauffant, comme par exemple un câble chauffant, à l'intérieur du boîtier 304 afin de garder les batteries 312 au chaud lors de leur charge à l'extérieur par temps froid et aussi lors de leur entreposage extérieur.

Il est également possible de prévoir un support fixe placé au-dessus de la chenille 302. Ce support peut être installé sur l'un ou l'autre des exemples d'appareils 10, 300 présentés. Le support peut être utile pour transporter de l'équipement, comme par exemple une boîte à outils.

## Revendications

1. Un appareil de traction compact (10), incluant :
un boîtier (14) étanche de forme allongée s'étendant dans un axe longitudinal et définissant une chambre interne (30), le boîtier (14) ayant une paroi supérieure (14a) et une paroi inférieure (14b);
un guidon (20) relié au boîtier (14) et s'étendant substantiellement vers l'arrière ;
une chenille (12) disposée autour du boîtier (14) selon son axe longitudinal et permettant à l'appareil (10) de se mouvoir lorsque la chenille (12) est entraînée en rotation autour du boîtier (14); et
un moteur à essence (32) situé dans la chambre interne (30) du boîtier (14);
**caractérisé en ce que** :
l'appareil (10) inclut un générateur (80) placé dans la chambre interne (30) du boîtier (14) et servant à produire de l'électricité pouvant alimenter un équipement externe; et
le moteur à essence (32) sert à sélectivement entraîner la chenille (12) en rotation et à faire tourner le générateur (80).

2. L'appareil (10) selon la revendication 1, **caractérisé en ce qu'**il inclut :
une paire de glissières supérieures (34) disposée de façon longitudinale sur la paroi supérieure (14a) du boîtier (14);
une paire de glissières inférieures disposée de façon longitudinale sur la paroi inférieure (14b) du boîtier (14);
au moins un rouleau avant (42) monté en rotation à l'avant du boîtier (14); et
au moins un rouleau arrière (50) monté en rotation à l'arrière du boîtier (14);
la chenille (12) comprenant une face intérieure qui est supportée par les glissières (34) et les rouleaux (42, 50).

3. L'appareil (10) selon la revendication 2, **caractérisé en ce qu'**il inclut une transmission (60) assurant au moins une partie du lien mécanique entre le moteur (32) et la chenille (12).

4. L'appareil (10) selon la revendication 3, **caractérisé en ce que** la transmission (60) est reliée mécaniquement au rouleau arrière (50).

5. L'appareil (10) selon l'une quelconque des revendications 1 à 4, **caractérisé en ce que** le générateur (80) produit de l'électricité à un voltage correspondant à une prise de courant domestique.

6. L'appareil (10) l'une quelconque des revendications 1 à 5, **caractérisé en ce que** le générateur (80) comprend un axe de rotation disposé de façon transversale à l'axe longitudinal du boîtier (14).

7. L'appareil (10) selon la revendication 5 ou 6, **caractérisé en ce que** le rotor interne du générateur (80) et le moteur à essence (32) sont reliés mécaniquement par l'intermédiaire d'un embrayage électrique (84).

8. L'appareil (10) selon l'une quelconque des revendications 1 à 7, **caractérisé en ce que** la chambre interne (30) est maintenue à une pression positive relativement à la pression atmosphérique.

9. L'appareil (10) selon l'une quelconque des revendications 1 à 8, **caractérisé en ce que** le boîtier (14) comprend des parois latérales amovibles (16).

10. L'appareil (10) selon l'une quelconque des revendications 1 à 9, **caractérisé en ce que** l'appareil (10) comprend un support (210) destiné à recevoir une extrémité d'un attelage (202) d'un traîneau (200).

11. L'appareil (10) selon la revendication 10, **caractérisé en ce que** le support (210) comprend une tige transversale (210) reliée au haut du boîtier (14).

12. L'appareil (10) selon la revendication 11, **caractérisé en ce que** la tige transversale (210) et l'extrémité de l'attelage (202) sont reliées de façon coulissante.

13. L'appareil (10) selon l'une quelconque des revendications 1 à 12, **caractérisé en ce qu'**il comprend un élément chauffant placé dans la chambre interne (30) et pouvant être alimenté en électricité de l'extérieur pour conserver une température minimale lorsque l'appareil (10) n'est pas en utilisation.

14. L'appareil (10) selon l'une quelconque des revendications 1 à 13, **caractérisé en ce que** l'appareil (10) comprend au moins une des caractéristiques suivantes : un frein actionnable (66) à partir du guidon (20), et le boîtier (14) de l'appareil (10) est fait au moins partiellement d'aluminium.

## Patentansprüche

1. Eine kompakte Zugvorrichtung (10), umfassend :
ein dichtes Gehäuse (14) von länglicher Form, das sich in einer Längsachse erstreckt und eine Innenkammer (30) definiert, wobei das Gehäuse (14) eine obere Wand (14a) und eine untere Wand (14b) hat ;
eine Lenkstange (20), die mit dem Gehäuse (14) verbunden ist und sich im Wesentlichen nach hinten erstreckt;
eine Raupe (12), die das Gehäuse (14) gemäß seiner Längsachse umschlingt und der Vorrichtung (10) ermöglicht, sich fortzubewegen, wenn die Raupe (12) in Rotation um das Gehäuse (14) herum versetzt wird; und
einen Benzinmotor (32), der sich in der Innenkammer (30) des Gehäuse (14) befindet,
**dadurch gekennzeichnet, dass**
die Vorrichtung (10) einen in der Innenkammer (30) angeordneten Generator (80) umfasst, der dazu dient, elektrischen Strom zu erzeugen, der eine externe Ausrüstung speisen kann ; und
der Benzinmotor (32) fähig ist, selektiv die Kette (12) rotieren zu lassen und den Generator (80) anzutreiben.

2. Vorrichtung (10) nach Anspruch 1, **dadurch gekennzeichnet, dass** sie umfasst:
ein Paar obere Gleitschienen (34), in Längsrichtung auf der oberen Wand (14a) des Gehäuses (14) angeordnet;
ein Paar untere Gleitschienen, in Längsrichtung auf der unteren Wand (14b) des Gehäuses (14) angeordnet;
wenigstens eine vordere Rolle (42), drehbar vorn an dem Gehäuse (14) befestigt; und
wenigstens eine hintere Rolle (50), drehbar hinten an dem Gehäuse (14) befestigt;
wobei die Raupe (12) eine Innenseite umfasst, die durch die Gleitschienen (34) und die Rollen (42, 50) getragen wird.

3. Vorrichtung (10) nach Anspruch 2, **dadurch gekennzeichnet, dass** sie eine Transmission (60) umfasst, die wenigstens einen Teil der mechanischen Verbindung zwischen dem Motor (32) und der Raupe (12) gewährleistet.

4. Vorrichtung (10) nach Anspruch 3, **dadurch gekennzeichnet, dass** die Transmission (60) mechanisch mit der hinteren Rolle (50) verbunden ist.

5. Vorrichtung (10) nach einem der Ansprüche 1 bis 4, **dadurch gekennzeichnet, dass** der Generator (80) elektrischen Strom mit einer Spannung erzeugt, die derjenigen einer Haushaltssteckdose entspricht.

6. Vorrichtung (10) nach einem der Ansprüche 1 bis 5, **dadurch gekennzeichnet, dass** der Generator (80) eine transversal zur Längsachse des Gehäuses (14) angeordnete Rotationsachse umfasst.

7. Vorrichtung (10) nach Anspruch 5 oder 6, **dadurch gekennzeichnet, dass** der Innenrotor des Generators (80) und der Benzinmotor (32) vorzugsweise mechanisch durch eine elektrische Kupplung (84) verbunden sind.

8. Vorrichtung (10) nach einem der Ansprüche 1 bis 7, **dadurch gekennzeichnet, dass** die Innenkammer (30) auf einem in Bezug auf den Luftdruck positiven Druck gehalten wird.

9. Vorrichtung (10) nach einem der Ansprüche 1 bis 8, **dadurch gekennzeichnet, dass** das Gehäuse (14) abnehmbare Seitenwände (16) umfasst.

10. Vorrichtung (10) nach einem der Ansprüche 1 bis 9, **dadurch gekennzeichnet, dass** die Vorrichtung (10) einen Bügel (210) umfasst, dazu bestimmt, ein Ende einer Kupplungseinrichtung (202) eines Schlitten (200) aufzunehmen.

11. Vorrichtung (10) nach Anspruch 10, **dadurch gekennzeichnet, dass** der Bügel (210) eine oben am Gehäuse (14) befestigte Querstange (210) umfasst.

12. Vorrichtung (10) nach Anspruch 11, **dadurch gekennzeichnet, dass** die Querstange (210) und das Ende der Kupplungseinrichtung (202) auf verschiebbare Weise verbunden sind.

13. Vorrichtung (10) nach einem der Ansprüche 1 bis 12, **dadurch gekennzeichnet, dass** sie ein Heizelement umfasst, das in der Innenkammer (30) angeordnet ist und mit elektrischem Strom von außen gespeist werden kann, um eine Mindesttemperatur aufrecht zu erhalten, wenn die Vorrichtung(10) nicht benützt wird.

14. Vorrichtung (10) nach einem der Ansprüche 1 bis 13, **dadurch gekennzeichnet, dass** die Vorrichtung (10) wenigstens eines der folgenden Merkmale umfasst: eine von der Lenkstange (20) aus betätigbare Bremse (60) und, dass das Gehäuse (14) der Vorrichtung (10) zumindest teilweise aus Aluminium gemacht ist.

## Claims

1. A compact pulling apparatus (10), including:
a watertight elongate housing (14) extending along a longitudinal axis and defining an inner chamber (30), the housing (14) including a top wall (14a) and a bottom wall (14b);
a handlebar (20) connected to the housing (14) and extending substantially rearward;
a track (12) disposed around the housing (14) along its longitudinal axis and enabling the apparatus (10) to move when the track (12) is rotatably driven around the housing (14);
a gasoline engine (32) located within the inner chamber (30) of the housing (14);
**characterized in that**:
the apparatus (10) includes a generator (80) located within the inner chamber (30) of the housing (14) to produce electricity which can power an external equipment; and
the gasoline engine (32) is provided to selectively rotatably drive the track (12) and the generator (80).

2. The apparatus (10) according to claim 1, **characterized in that** it includes:
a pair of top skids (34) disposed longitudinally on the top wall (14a) of the housing (14);
a pair of bottom skids disposed longitudinally on the bottom wall (14b) of the housing (14);
at least one front roller (42) rotatably connected at the front of the housing (14);
at least one rear roller (50) rotatably connected at the rear of the housing (14); and
the track (12) includes an inner face which is supported by the skids (34) and the rollers (42, 50).

3. The apparatus (10) according to claim 2, **characterized in that** it includes a transmission (60) forming at least part of the mechanical connection between the engine (32) and the track (12).

4. The apparatus (10) according to claim 3, **characterized in that** the transmission (60) is mechanically connected to the rear roller (50).

5. The apparatus (10) according to any one of claims 1 to 4, **characterized in that** the generator (80) produces electricity at a voltage corresponding to that of a domestic power outlet.

6. The apparatus (10) according to any one of claims 1 to 5, **characterized in that** the generator (80) has a rotation axis disposed transversely with reference to the longitudinal axis of the housing (14).

7. The apparatus (10) according to claim 5 or 6, **characterized in that** the internal rotor of the generator (80) and the gasoline engine (32) are mechanically connected through an electric clutch (84).

8. The apparatus (10) according to any one of claims 1 to 7, **characterized in that** the inner chamber (30) is maintained at a positive pressure with reference to the atmospheric pressure.

9. The apparatus (10) according to any one of claims 1 to 8, **characterized in that** the housing (14) includes detachable lateral walls (16).

10. The apparatus (10) according to any one of claims 1 to 9, **characterized in that** the apparatus (10) includes a support (210) intended to receive one end of a hitch (202) for a sled (200).

11. The apparatus (10) according to claim 10, **characterized in that** the support (210) includes a transversal strut (210) connected to the top of the housing (14).

12. The apparatus (10) according to claim 11, **characterized in that** the transversal strut (210) and the end of the hitch (202) are slidably connected.

13. The apparatus (10) according to any one of claims 1 to 12, **characterized in that** it includes a heating element provided within the inner chamber (30) that can be powered using electricity from the outside in order to maintain a minimum temperature when the apparatus (10) is not in use.

14. The apparatus (10) according to any one of claims 1 to 13, **characterized in that** the apparatus (10) includes at least one of the following features: a brake (66) which can be operated from the handlebar (20), and the housing (14) of the apparatus (10) is made at least in part of aluminum.
